# EUROPEAN PATENT APPLICATION

(11) **EP 4 152 064 A1**
(43) Date of publication of application: **22.03.2023**
(21) Application number: 22189977.6
(22) Date of filing: 11.08.2022
(51) Int. Cl.: G02B 6/42

(54) **TECHNOLOGIES FOR OPTICAL COUPLING TO PHOTONIC INTEGRATED CIRCUITS**

(30) Priority: 17.09.2021 US 202117478337
(71) Applicant: INTEL Corporation, Santa Clara, CA 95054 (US)
(72) Inventor: TADAYON, Pooya, Portland, OR 97225 (US); HECK, John M., Berkeley, CA 94702 (US); NEKKANTY, Srikant, Chandler, AZ 85286 (US); WALCZYK, Joseph F., Tigard, OR 97224 (US); DIGLIO, Paul J., Gaston, OR 97119 (US); BRUN, Xavier F., Hillsboro, OR 97124 (US); MORGAN, Wesley B., Lake Oswego, OR 97035 (US)
(74) Representative: HGF

(57) **Abstract**

Technologies for optical coupling to photonic integrated circuit (PIC) dies are disclosed. In the illustrative embodiment, a lens assembly with one or more lenses is positioned to collimate light coming out of one or more waveguides in the PIC die. Part of the illustrative lens assembly extends above a top surface of the PIC die and is in contact with the PIC die. The top surface of the PIC die establishes the vertical positioning of the lens assembly. In the illustrative embodiment, the lens assembly is positioned at least partially inside a cavity defined within the PIC die, which allows the lens assembly to be integrated at the wafer level, before singulation into individual dies.

## Description

### BACKGROUND

Photonic integrated circuits (PICs) can be used for several applications such as communications. Efficiently and cheaply aligning optics to couple light into and out of PICs can be a challenge. Approaches include using V-grooves to align a fiber connector or attaching a lens to the PIC. However, these approaches can be expensive and/or low yield.

### BRIEF DESCRIPTION OF THE DRAWINGS

FIG. 1 is an isometric view of a system including a photonic integrated circuit die.
FIG. 2 is a front view of the system of FIG. 1.
FIG. 3 is a cross-sectional view of the system of FIG 1.
FIG. 4 is a simplified flow diagram of at least one embodiment of a method for manufacturing the photonic integrated circuit die of FIG. 1.
FIG. 5 is an isometric view of a lens array of the system of FIG. 1.
FIG. 6 is a top-down view of the lens array of FIG. 5.
FIG. 7 is an isometric view of a wafer including several photonic integrated circuits.

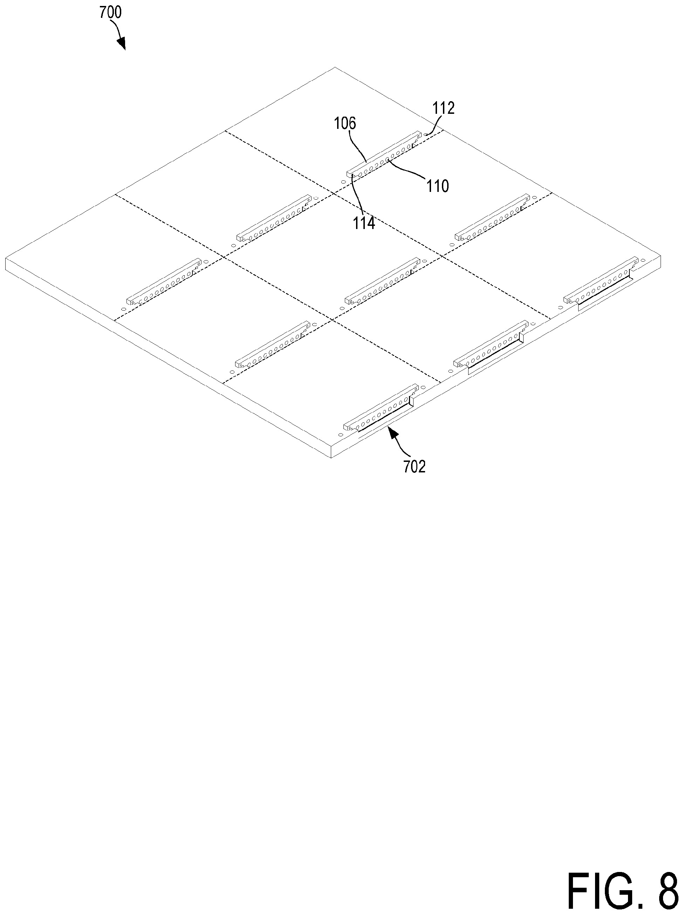

FIG. 8 is an isometric view of the wafer of FIG. 7 with lens arrays.
FIG. 9 is an isometric view of the wafer of FIG. 7 with a window used to cure epoxy that secures the lens arrays.
FIG. 10 is a cross-sectional view of the wafer and window of FIG. 9.
FIG. 11 is an isometric view of dies after singulation of the wafer of FIG. 7.
FIG. 12 is an isometric view of a system including a photonic integrated circuit die.
FIG. 13 is an isometric view of a cylindrical lens of the system of FIG. 12.
FIG. 14 is a cross-sectional view of the system of FIG. 12.
FIG. 15 is a top-down view of the photonic integrated circuit die of FIG. 12.
FIG. 16 is an isometric view of a system including a photonic integrated circuit die.
FIG. 17 is a cross-sectional view of the system of FIG. 16.
FIG. 18 is a top-down view of the photonic integrated circuit die of FIG. 16.
FIG. 19 is a top view of a wafer and dies that may be included in a microelectronic assembly, in accordance with any of the embodiments disclosed herein.
FIG. 20 is a cross-sectional side view of an integrated circuit device that may be included in a microelectronic assembly, in accordance with any of the embodiments disclosed herein.
FIGS. 21A-21D are perspective views of example planar, gate-all-around, and stacked gate-all-around transistors.
FIG. 22 is a cross-sectional side view of an integrated circuit device assembly that may include a microelectronic assembly, in accordance with any of the embodiments disclosed herein.
FIG. 23 is a block diagram of an example electrical device that may include a microelectronic assembly, in accordance with any of the embodiments disclosed herein.

### DETAILED DESCRIPTION

In various embodiments disclosed herein, a lens assembly is secured to a photonic integrated circuit (PIC) die to facilitate coupling into and out of waveguides of the PIC die. In the illustrative embodiment, the part of the lens assembly hangs over the top surface of the PIC die, which aligns the lens assembly vertically. The lens assembly can be aligned in the two other directions using, e.g., a pick-and-place machine and then epoxied in place. The illustrative lens assembly collimates light from the waveguides of the PIC die, relaxing alignment tolerances for optical coupling to the PIC die.

In the illustrative embodiment, the lens assembly can be secured to a wafer before the wafer is singulated into dies, and then each die can be tested before integration into a package. Such an approach can improve the yield of the result packages by discarding any dies that do not pass a test.

As used herein, the phrase "communicatively coupled" refers to the ability of a component to send a signal to or receive a signal from another component. The signal can be any type of signal, such as an input signal, an output signal, or a power signal. A component can send or receive a signal to another component to which it is communicatively coupled via a wired or wireless communication medium (e.g., conductive traces, conductive contacts, air). Examples of components that are communicatively coupled include integrated circuit dies located in the same package that communicate via an embedded bridge in a package substrate and an integrated circuit component attached to a printed circuit board that send signals to or receives signals from other integrated circuit components or electronic devices attached to the printed circuit board.

In the following description, specific details are set forth, but embodiments of the technologies described herein may be practiced without these specific details. Well-known circuits, structures, and techniques have not been shown in detail to avoid obscuring an understanding of this description. Phrases such as "an embodiment," "various embodiments," "some embodiments," and the like may include features, structures, or characteristics, but not every embodiment necessarily includes the particular features, structures, or characteristics.

Some embodiments may have some, all, or none of the features described for other embodiments. "First," "second," "third," and the like describe a common object and indicate different instances of like objects being referred to. Such adjectives do not imply objects so described must be in a given sequence, either temporally or spatially, in ranking, or any other manner. "Connected" may indicate elements are in direct physical or electrical contact, and "coupled" may indicate elements co-operate or interact, but they may or may not be in direct physical or electrical contact. Furthermore, the terms "comprising," "including," "having," and the like, as used with respect to embodiments of the present disclosure, are synonymous. Terms modified by the word "substantially" include arrangements, orientations, spacings, or positions that vary slightly from the meaning of the unmodified term. For example, the central axis of a magnetic plug that is substantially coaxially aligned with a through hole may be misaligned from a central axis of the through hole by several degrees. In another example, a substrate assembly feature, such as a through width, that is described as having substantially a listed dimension can vary within a few percent of the listed dimension.

It will be understood that in the examples shown and described further below, the figures may not be drawn to scale and may not include all possible layers and/or circuit components. In addition, it will be understood that although certain figures illustrate transistor designs with source/drain regions, electrodes, etc. having orthogonal (e.g., perpendicular) boundaries, embodiments herein may implement such boundaries in a substantially orthogonal manner (e.g., within +/- 5 or 10 degrees of orthogonality) due to fabrication methods used to create such devices or for other reasons.

Reference is now made to the drawings, which are not necessarily drawn to scale, wherein similar or same numbers may be used to designate the same or similar parts in different figures. The use of similar or same numbers in different figures does not mean all figures including similar or same numbers constitute a single or same embodiment. Like numerals having different letter suffixes may represent different instances of similar components. The drawings illustrate generally, by way of example, but not by way of limitation, various embodiments discussed in the present document.

In the following description, for purposes of explanation, numerous specific details are set forth in order to provide a thorough understanding thereof. It may be evident, however, that the novel embodiments can be practiced without these specific details. In other instances, well-known structures and devices are shown in block diagram form in order to facilitate a description thereof. The intention is to cover all modifications, equivalents, and alternatives within the scope of the claims.

As used herein, the phrase "located on" in the context of a first layer or component located on a second layer or component refers to the first layer or component being directly physically attached to the second part or component (no layers or components between the first and second layers or components) or physically attached to the second layer or component with one or more intervening layers or components.

As used herein, the term "adjacent" refers to layers or components that are in physical contact with each other. That is, there is no layer or component between the stated adjacent layers or components. For example, a layer X that is adjacent to a layer Y refers to a layer that is in physical contact with layer Y.

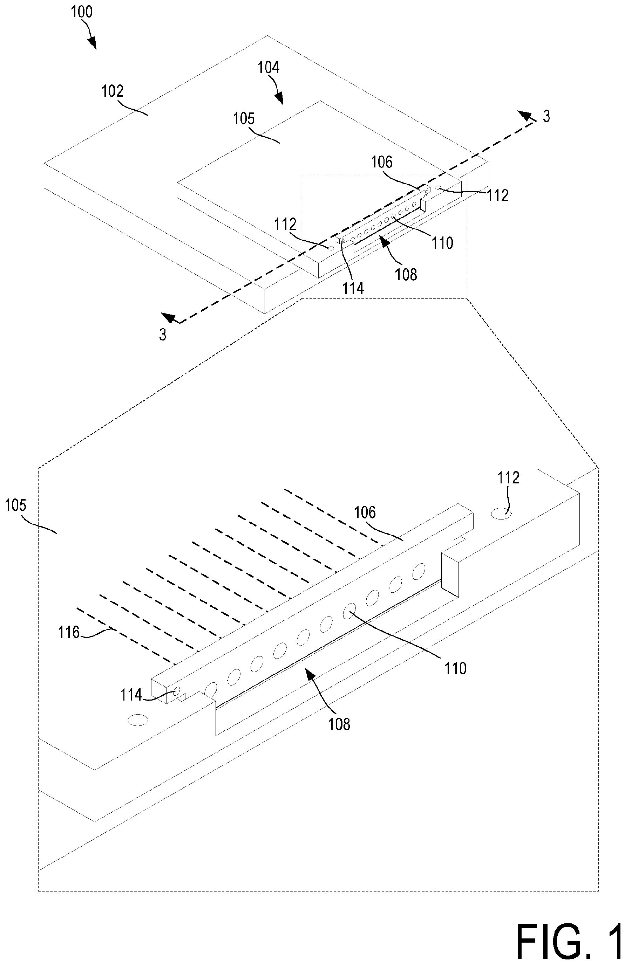

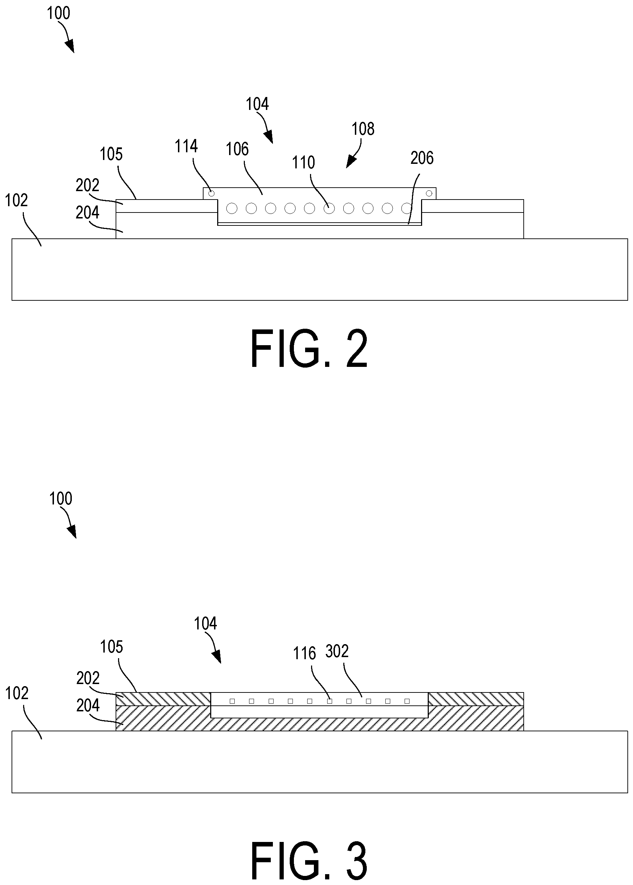

Referring now to FIG. 1, in one embodiment, a system 100 includes a substrate 102 that supports a photonic integrated circuit (PIC) die 104. A lens assembly 106 is positioned inside a cavity defined in the PIC die 104. The lens assembly 106 includes a lens array 108 of one or more lenses 110. Each lens 110 in the illustrative lens assembly 106 is aligned with a waveguide 116 defined in the PIC die 104. In the illustrative embodiment, each lens 110 collimates light from the corresponding waveguide (or focuses light into the corresponding waveguide). An epoxy layer 206 is visible in the front view of the system 100 shown in FIG. 2. The epoxy layer 206 secures the lens assembly 106 to a surface of the PIC die 104 at the bottom of the cavity defined in the PIC die 104.

In the illustrative embodiment and as discussed in more detail below, the lens assembly 106 is positioned in the cavity defined in the PIC die 104 using a pick-and-place machine. A part of the lens assembly 106 extends over the top surface 105 (i.e., the outermost surface) of the PIC die 104 and is in contact with the top surface 105 of the PIC die 104. It should be appreciated that, as used herein, the "top surface" 105 refers to an outer surface of the PIC die 104 and may, in some embodiments, be, e.g., a bottom surface or side surface of the PIC die 104, depending on the orientation of the PIC die 104. Similarly, the "side surface" 302 of the PIC die 104 (see FIG. 3) refers to a surface of the PIC die 104 other than the top surface 105, and may not be on the "side" of the PIC die 104, depending on the orientation of the PIC die 104. Unless noted otherwise, the side surface 302 of the PIC die 104 is at an angle relative to the top surface, such as an angle of 90°. In the illustrative embodiment, the lens assembly 106 extends over the top surface 105 in a direction that is perpendicular to the direction of the waveguides 116, as shown in FIG. 1. Additionally or alternatively, the lens assembly 106 may extend over the top surface 105 towards the waveguides 116, such that part of the lens assembly 106 is directly over the waveguides 116.

The vertical position of the lens assembly 106 (i.e., the position in the direction that is perpendicular to the plane defined by the waveguides shown in FIG. 1) is determined by the contact between the top surface 105 of the PIC die 104 and the part of the lens assembly 106 that extends over the top surface 105 of the PIC die 104. The position of the lens assembly 106 in the two orthogonal directions is controlled by the pick-and-place machine, which may use fiducials 112 to position the lens assembly 106.

In the illustrative embodiment, the substrate 102 is a circuit board, which may be made from ceramic, glass, and/or organic based materials with fiberglass and resin, such as FR-4. In other embodiments, other types of substrates 102 may be used, such as an integrated circuit component. The substrate 102 may have any suitable length or width, such as 10-500 millimeters. The substrate 102 may have any suitable thickness, such as 0.2-5 millimeters. The substrate 102 may support additional components besides the PIC die 104, such as an integrated circuit component, a processor unit, a memory device, an accelerator device, etc. The system 100 may be embodied as or otherwise include a system-on-a-chip, a network router, a network switch, a network interface controller, a server computer, a mobile computing device, a component on a communications satellite, etc.

The illustrative PIC die 104 is configured to generate, detect, and/or manipulate light. The PIC die 104 may include one or more lasers or other light sources, detectors, amplitude and/or phase modulators, filters, splitters, amplifiers, etc. In one embodiment, the PIC die 104 may receive electrical signals, such as from another component on the substrate 102, and generate a corresponding optical signal in a waveguide 116 to be sent to a remote device. Additionally or alternatively, the PIC die 104 may receive optical signals in a waveguide 116 and generate a corresponding electrical signal, which may be sent to another component on the substrate 102. The PIC die 104 may operate at any suitable optical wavelength, such as 1,200-1,800 nanometers. In some embodiments, the PIC die 104 may operate at a higher or lower wavelength, such as ultraviolet, visible, near infrared, far infrared, etc. In the illustrative embodiment, the PIC die 104 operates in the near infrared at a wavelength that is transparent in silicon.

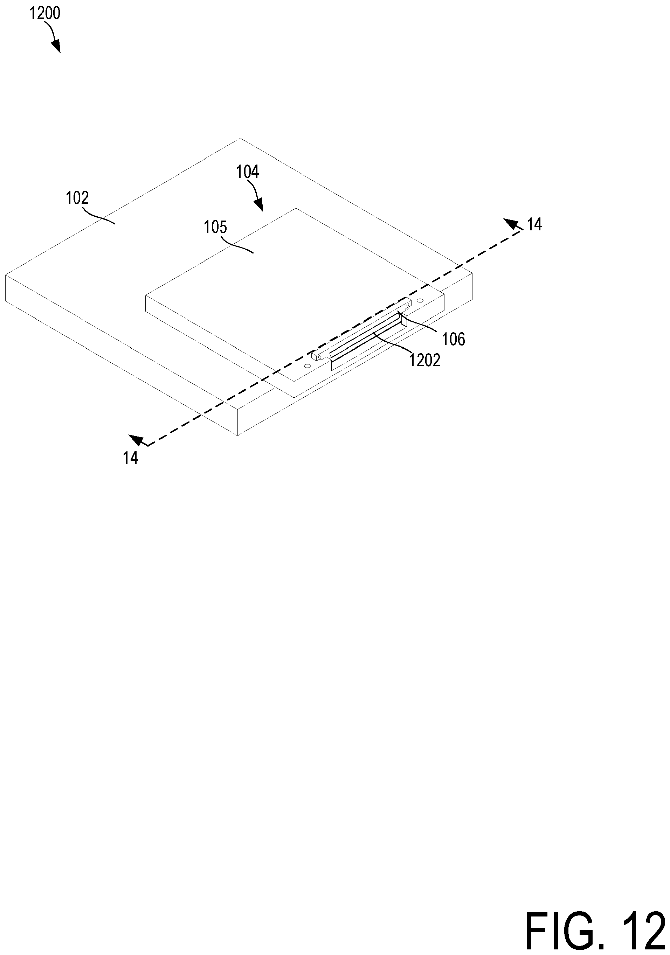

In the illustrative embodiment, each waveguide 116 extends to the side surface 302 of the PIC die 104, as shown in FIG. 3. FIG. 3 corresponds to a cross-section of the system 100 between the lens assembly 106 and the side surface 302 of the PIC die 104. In some embodiments, the waveguide 116 may not extend all the way to the side surface 302, such as embodiments in which a lens is patterned into the side surface 302 (see FIGS. 12-15). Additionally or alternatively, the waveguide 116 may expand in one or both dimensions to allow the light to expand before reaching the side surface 302. Each waveguide 116 may have any suitable dimensions, such as a width and/or height of 0.1-10 micrometers. In the illustrative embodiment, each waveguide 116 is square. In other embodiments, the waveguide 116 may have a different shape, such as a rectangular shape. In some embodiments, the waveguides 116 may be smaller and/or have a different shape in an interior section of the PIC die 104 than where the waveguides 116 end near the side surface 302. The PIC die 104 may include any suitable number of waveguides 116 that extend to the side surface 302, such as 1-32 waveguides 116. Of course, the PIC die 104 may include additional waveguides internally.

At the side surface 302, each waveguide 116 is separated by at least the diameter of the lenses 110 in the lens assembly 106. In the illustrative embodiment, the waveguides 116 are separated by about 250 micrometers. In other embodiments, the waveguides 116 are separated by 50-1,000 micrometers.

In the illustrative embodiment, the PIC die 104 has an oxide layer 202 on a substrate layer 204 (see, e.g., FIG. 2). In the illustrative embodiment, the waveguides 116 are defined in the oxide layer 202. The illustrative waveguides 116 are silicon waveguides in a silicon oxide layer 202. The higher index of refraction of the silicon relative to the silicon dioxide confines the light to the waveguides 116. In other embodiments, the waveguides 116 may be made from a different material and/or may be defined in a different material.

Each waveguide 116 may support one or more channels, such as 1-50 channels. Each channel may have any suitable bandwidth, such as 1-1,000 gigabits per second.

In the illustrative embodiment, the PIC die 104 includes one or more fiducials 112, which may be used by a pick-and-place machine to place the lens assembly 106. The fiducials 112 may be embodied as, e.g., a dot, a line, or other structure that indicates a location of a particular part of the PIC die 104.

The lens assembly 106 includes one or more lenses 110 that focus light into and out of the waveguides. In the illustrative embodiment, the lenses 110 are spherical. In other embodiments, the lenses 110 may have aspherical surfaces that may correct for aberrations such as spherical aberration. In some embodiments, the lens assembly 106 may include a cylindrical lens (see FIGS. 12-15 below for more detail). The lenses 110 may have any suitable spacing between them, such as 50-1,000 micrometers, measured from the center of one lens 110 to the next lens 110. In the illustrative embodiment, the lens assembly 106 is placed such that light propagating out of the waveguides 116 through the side surface 302 of the PIC die 104 is approximately collimated by the lenses 110. The lenses 110 may have any suitable focal length, such as 1-25 millimeters. The lenses 110 may collimate light from the waveguides 116 to a beam with any suitable mode field diameters, such a 50-1,000 micrometers.

It should be appreciated that the collimated light will allow for the light to be coupled to another device with more relaxed tolerances. For example, if the mode field diameter at a waveguide 116 is, e.g., two micrometers, and the mode field diameter after a lens 110 collimates the light is, e.g., 100 micrometers, then the tolerance of the positioning of the device coupling to the light is relaxed by a factor of 50.

A fiber attach unit or other connector (not shown in the figures) may be connected to the system 100 (e.g., to the substrate 102 or to the PIC die 104). Such a connector may include an optical system to couple light from the lens assembly 106 to optical fibers to carry the light to a remote device, such as a lens array coupling to an array of optical fibers.

The lens assembly 106 may be made from any suitable material, such as glass, plastic, fused silica, silicon, etc. In some embodiments, the lens assembly 106 may include one or more fiducials 114. In the illustrative embodiment, the lens assembly 106 is held in place relative to the PIC die 104 by an epoxy layer 206 (see FIG. 2).

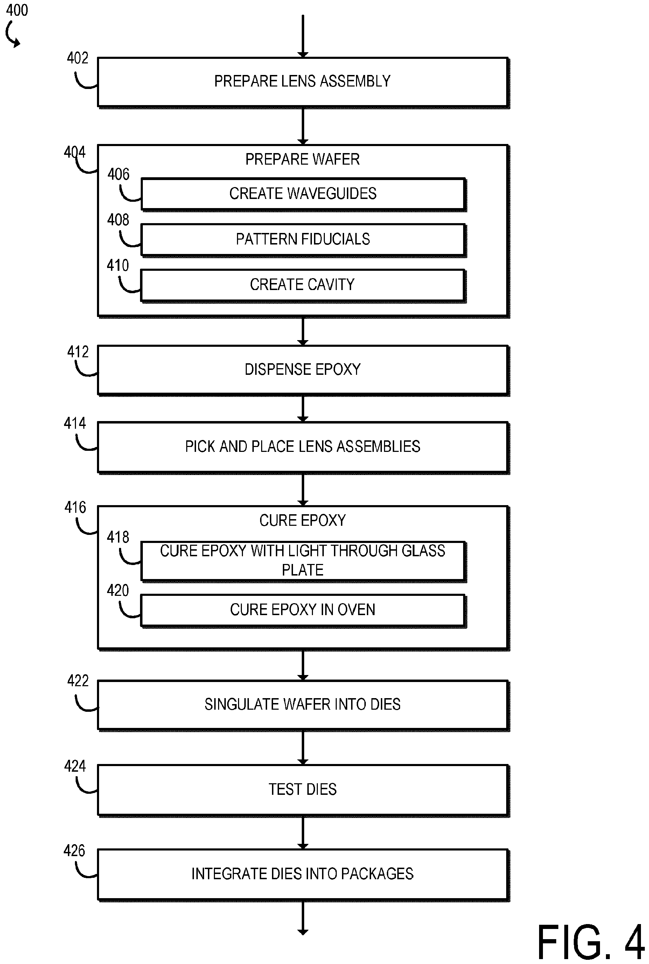

Referring now to FIG. 4, in one embodiment, a flowchart for a method 400 for creating the system 100 with a PIC die 104 is shown. The method 400 may be executed by a technician and/or by one or more automated machines. In some embodiments, one or more machines may be programmed to do some or all of the steps of the method 400. Such a machine may include, e.g., a memory, a processor, data storage, etc. The memory and/or data storage may store instructions that, when executed by the machine, causes the machine to perform some or all of the steps of the method 400. The method 400 may use any suitable set of techniques that are used in semiconductor processing, such as chemical vapor deposition, atomic layer deposition, physical layer deposition, molecular beam epitaxy, layer transfer, photolithography, ion implantation, dry etching, wet etching, thermal treatments, flip chip, layer transfer, magnetron sputter deposition, pulsed laser deposition, etc. It should be appreciated that the method 400 is merely one embodiment of a method to create the system 100, and other methods may be used to create the system 100. In some embodiments, steps of the method 400 may be performed in a different order than that shown in the flowchart.

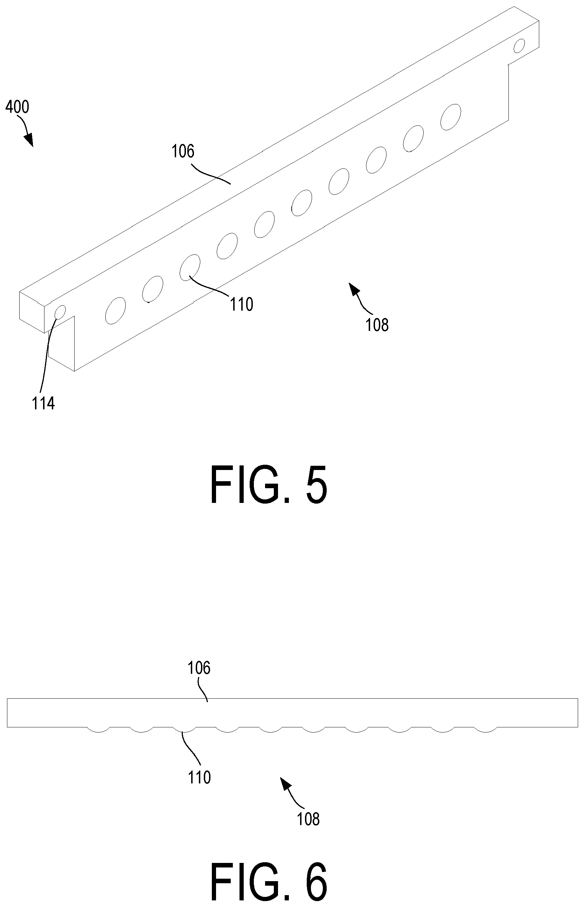

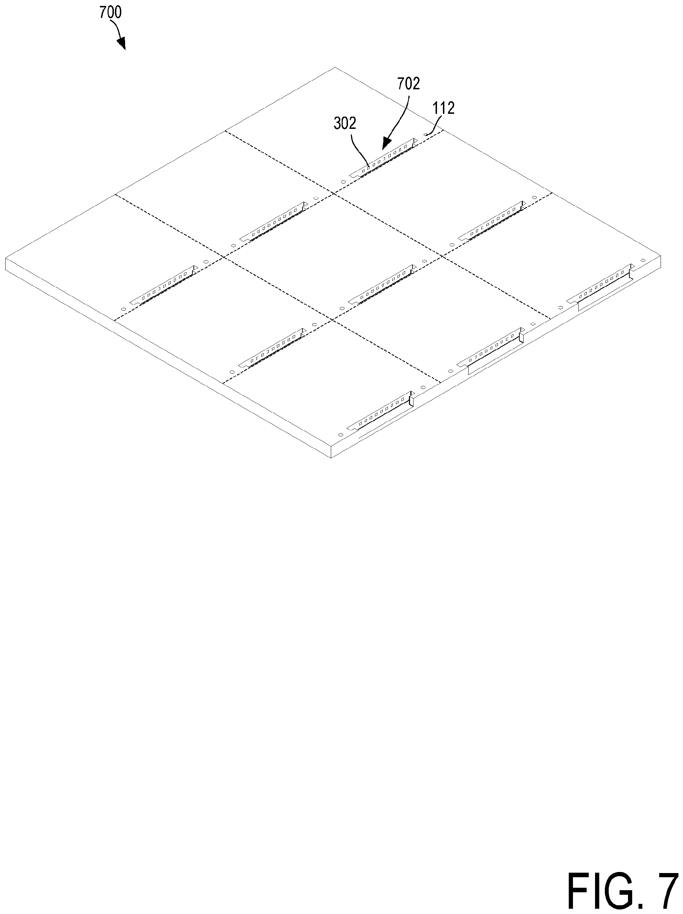

The method 400 begins in block 402, in which the lens assembly 106 is prepared. The lens assembly 106 may be prepared using any suitable process, such as injection molding, using a glass wafer, etc. In the illustrative embodiment, each lens assembly 106 is prepared separately. In some embodiments, an array of lens assemblies 106 may be created, one for each PIC die 104 in a wafer 700 (see FIG. 7). In such an embodiment, all of the lens assemblies 106 for a wafer may be placed as one component, and the lens assemblies 106 can be singulated when the PIC dies 104 are singulated. FIG. 5 shows an isometric view of a lens assembly 106, and FIG. 6 shows a top-down view of a lens assembly 106.

In block 404, a wafer 700 of photonic integrated circuits is prepared. The wafer 700 is shown in FIG. 7. The wafer 700 may include, e.g., lasers or other light sources, optical detectors, filters, splitters, electrical connections, etc. As part of preparing the wafer 700, waveguides 116 are created in block 406. Fiducials 112 may be patterned in block 408.

In the illustrative embodiment, a cavity 702 for the lens assembly 106 is created in the PIC die 104 in block 410. The cavity 702 allows the lens assembly 106 to be placed with the photonic integrated circuits are in the form of the wafer 700, as opposed to individual PIC dies 104. For example, if the lens assembly 106 needed to be placed over an extreme edge of a PIC die 104, then the lens assembly 106 would interfere with an adjacent PIC die 104 on the wafer 700. Creating the cavity 702 for placement of the lens assembly 106 allows the lens assembly 106 to be placed at the wafer level.

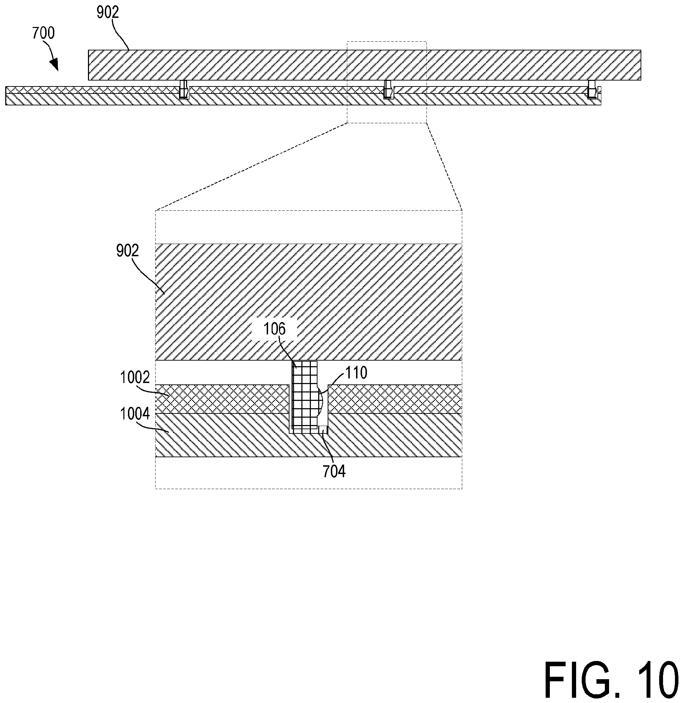

In block 412, epoxy 704 is dispensed into each cavity 702. The epoxy 704 is visible in the zoomed-in view of FIG. 10.

In block 414, a lens assembly 106 is placed in each cavity 702 on the epoxy 704, such as by using a pick-and-place machine. The pick-and-place machine may use the fiducials 112 to precisely place the lens assembly 106 in a desired position. In the illustrative embodiment, the lens assembly 106 is positioned to within, e.g., 0.5-1.5 micrometers in the directions perpendicular to the propagation of light from the waveguides 116. In some embodiments, the lens assembly 106 is positioned to within, e.g., 15-20 micrometers in the direction parallel to the propagation of light from the waveguides 116. More generally, the lens assembly 106 may be positioned to within 0.5-20 micrometers in any direction, depending on the embodiment. It should be appreciated that the position of the lens assembly 106 in the vertical direction (i.e., perpendicular to the top surface 105) is determined by the flatness of the top surface 105, not necessarily the precision of the pick-and-place machine. In the illustrative embodiment, the flatness of the top surface 105 is sub-micron.

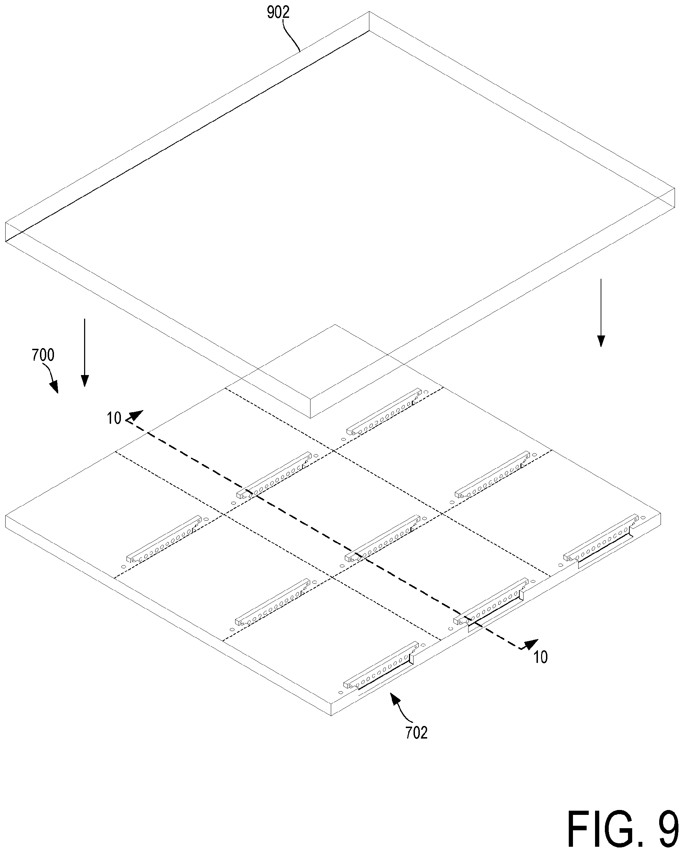

In block 416, the epoxy 704 is cured, securing the lens assemblies 106 in place. In the illustrative embodiment, a transparent window 902 is positioned on the lens assemblies 106 to hold the lens assemblies 106 in place, as shown in FIGS. 9 and 10. The epoxy 704 can be cured by exposure with ultraviolet light (which may pass through the transparent window 902 and/or the lens assembly 106) in block 418. Additionally or alternatively, the epoxy 704 can be cured in an oven, such as a high-pressure oven, in block 420.

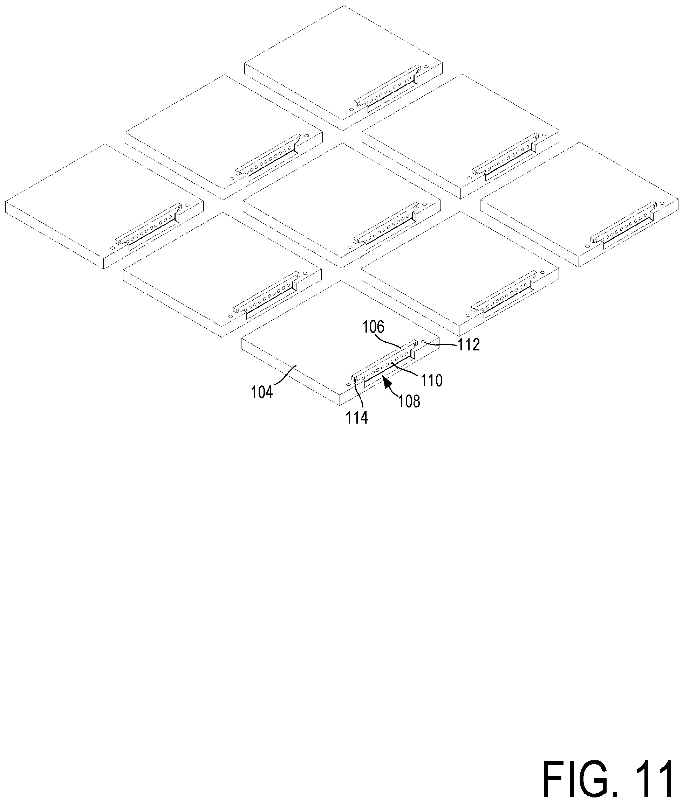

In block 422, the wafer 700 is singulated into several PIC dies 104, as shown in FIG. 11.

In block 424, in some embodiments, the PIC dies 104 are individually tested, such as by providing power to the PIC die 104 and testing operation of the photonic integrated circuit and/or alignment of the lens assembly 106. PIC dies 104 that are faulty can be discarded at this stage, preventing any PIC die 104 from being incorporated into a package, which would then reduce the yield of the packaging process.

In block 426, the PIC dies 104 are incorporated into packages, such as a package with the substrate 102 and one or more integrated circuit components.

Referring now to FIGS. 12-15, in one embodiment, a system 1200 includes a substrate 102 that supports a PIC die 104, which includes a lens assembly 106. The substrate 102, PIC die 104, and lens assembly 106 of the system 1200 may be similar to those of the system 100, except for features relating to cylindrical lenses. A thorough description of those components will not be repeated in the interest of clarity.

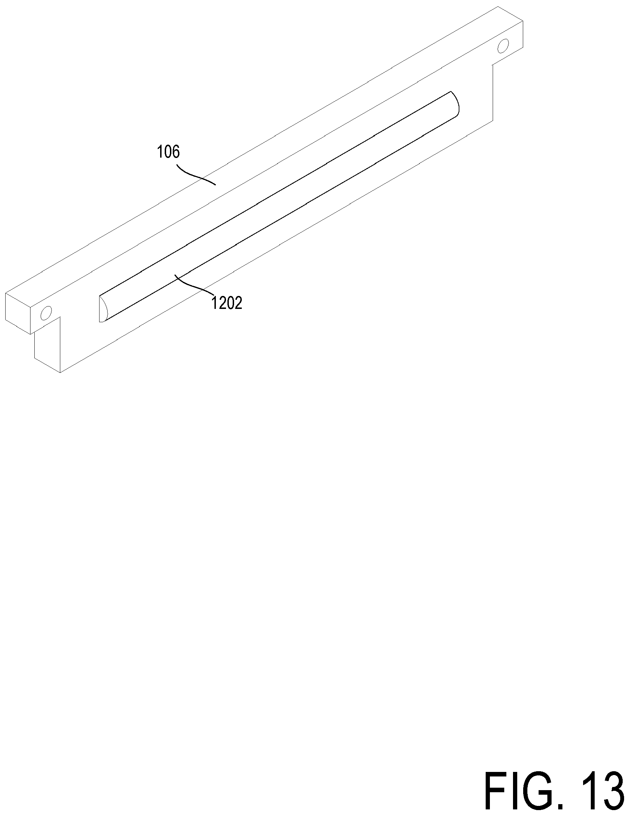

The lens assembly 106 of the system 1200 has a cylindrical lens 1202 on it. As shown in FIG. 13, the cylindrical lens 1202 extends along the lens assembly 106 in a direction that is parallel to the top surface 105 of the PIC die 104. The cylindrical lens 1202 may have any suitable focal length, such as 1-25 millimeters.

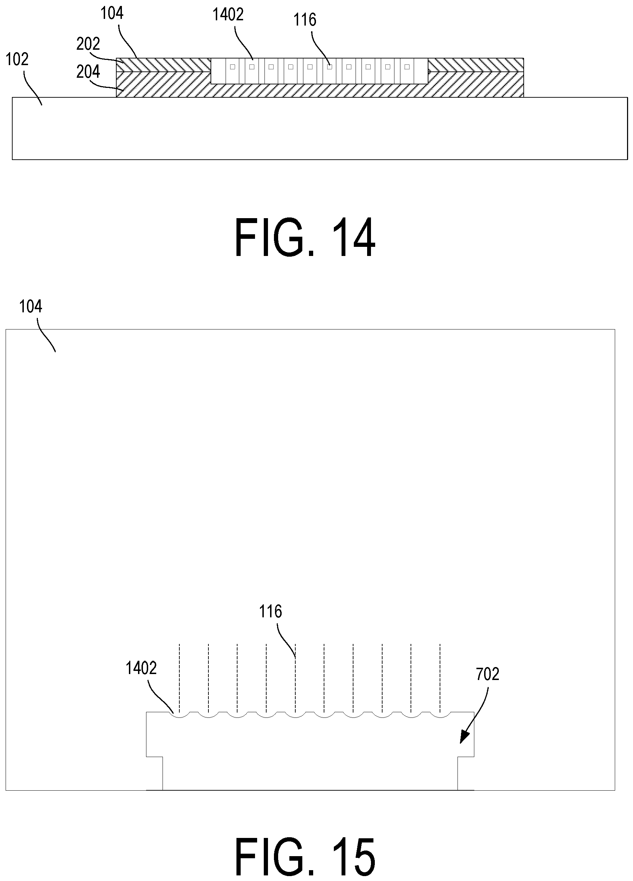

The cylindrical lens 1202 focuses light from the waveguides 116 along one dimension. In order to focus the light from the waveguides 116 along the other dimension, cylindrical lenses 1402 are patterned into the PIC die 104, as shown in FIGS. 14 and 15. The cylindrical lenses 1402 are oriented perpendicular to the cylindrical lens 1202 of the lens assembly 106. The cylindrical lenses 1402 focus the light from the waveguides 116 in one direction, and the cylindrical lens 1202 focuses the light from the waveguides 116 in the other direction, resulting in a collimated beam.

The focal length of the cylindrical lenses 1402 may be any suitable value, such as 1-25 millimeters. In some embodiments, the waveguide 116 may have different dimensions in different directions, allowing the light exiting the waveguides 116 to expand faster in one direction than the other, compensating for the different distances of the cylindrical lenses 1202, 1402.

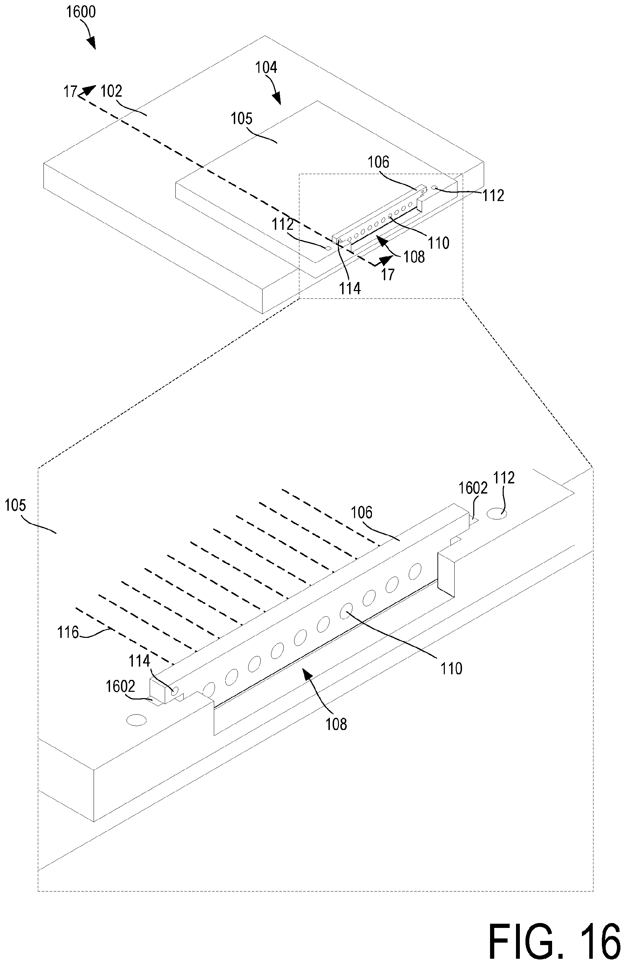

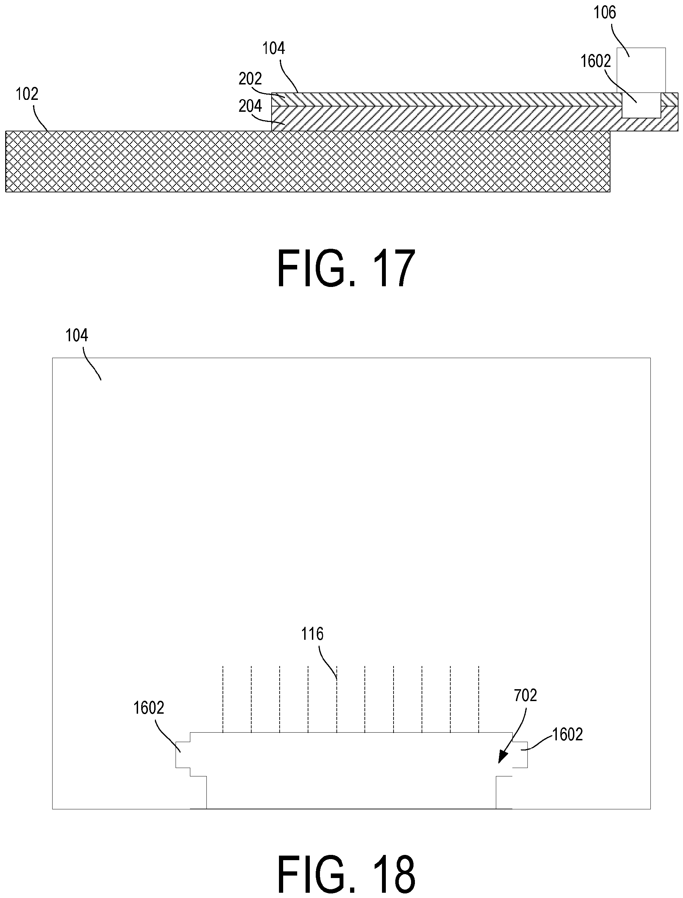

Referring now to FIGS. 16-18, in one embodiment, a system 1600 includes a substrate 102 that supports a PIC die 104, which includes a lens assembly 106. The substrate 102, PIC die 104, and lens assembly 106 of the system 1200 may be similar to those of the system 100, except for the cavity 702 defined in the PIC die 104. A thorough description of those components will not be repeated in the interest of clarity.

The cavity 702 defined in the PIC die 104 of the system 1600 has two edge regions 1602 such that the cavity 702 extends past the lens assembly 106 is both directions along one dimension of the cavity 702 (i.e., the cavity 702 extends to the edge regions 1602 past the lens assembly 106). As a result, edges of the lens assembly 106 are in contact with the top surface of the PIC die 104, while a center region of the lens assembly 106 over the edge regions 1602 of the cavity 702 are not. Because of the reduced contact area between the lens assembly 106 and the PIC die 104, certain defects such as a flatness, perpendicularity, or positional defect on a portion of the lens assembly 106 may have a reduced or eliminated effect on the position and orientation of the lens assembly 106.

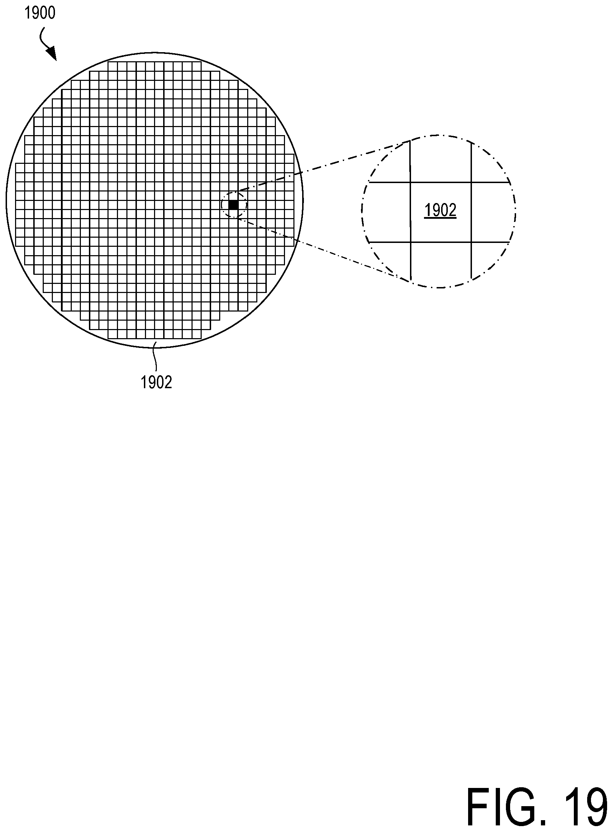

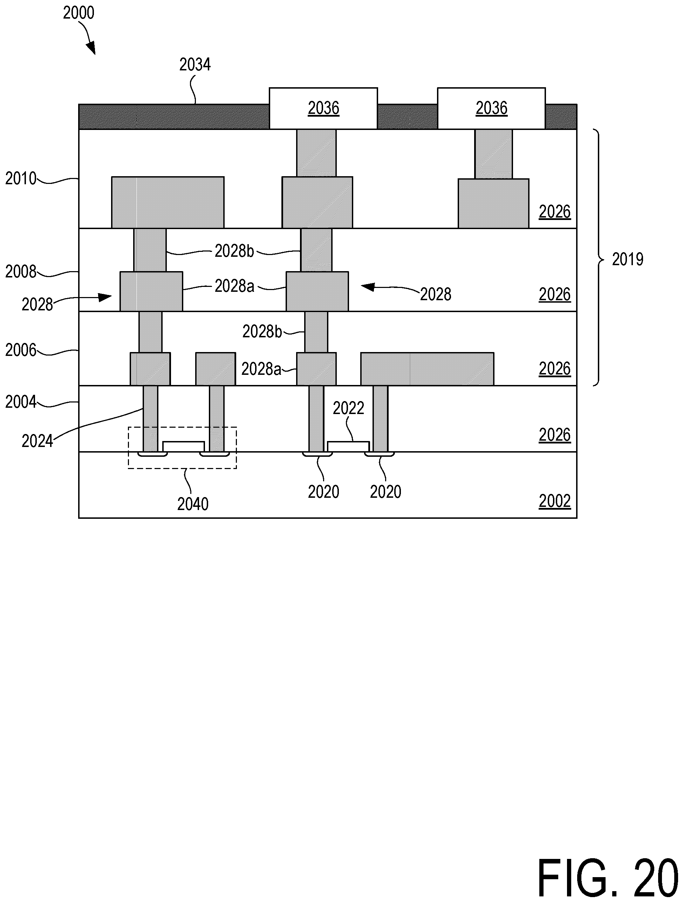

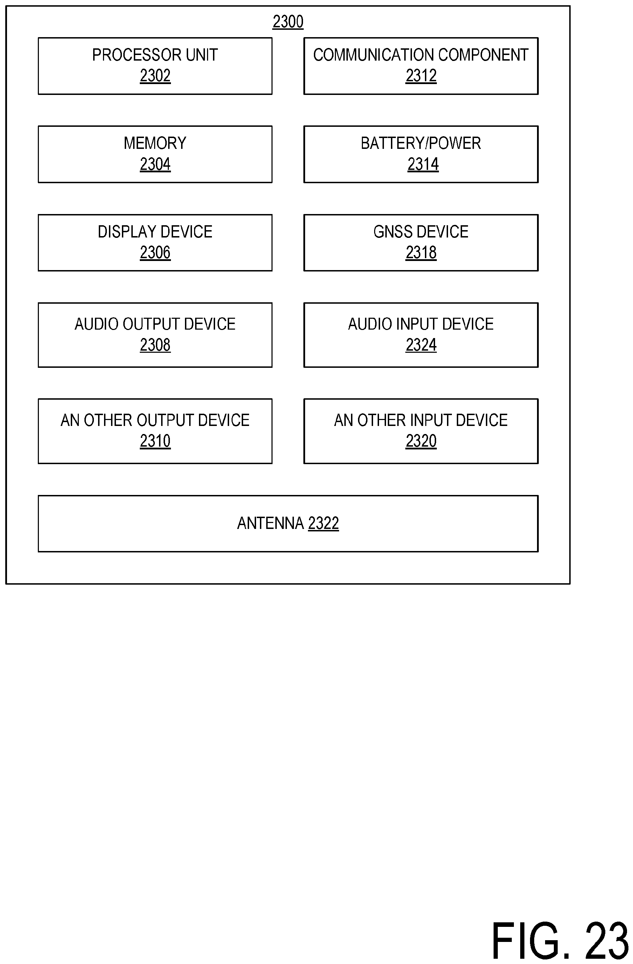

FIG. 19 is a top view of a wafer 1900 and dies 1902 that may be included in any of the systems 100 disclosed herein (e.g., as any suitable ones of the PIC dies 104). The wafer 1900 may be composed of semiconductor material and may include one or more dies 1902 having integrated circuit structures formed on a surface of the wafer 1900. The individual dies 1902 may be a repeating unit of an integrated circuit product that includes any suitable integrated circuit. After the fabrication of the semiconductor product is complete, the wafer 1900 may undergo a singulation process in which the dies 1902 are separated from one another to provide discrete "chips" of the integrated circuit product. The die 1902 may be any of the PIC dies 104 disclosed herein. The die 1902 may include one or more transistors (e.g., some of the transistors 2040 of FIG. 20, discussed below), supporting circuitry to route electrical signals to the transistors, passive components (e.g., signal traces, resistors, capacitors, or inductors), and/or any other integrated circuit components. In some embodiments, the wafer 1900 or the die 1902 may include a memory device (e.g., a random access memory (RAM) device, such as a static RAM (SRAM) device, a magnetic RAM (MRAM) device, a resistive RAM (RRAM) device, a conductive-bridging RAM (CBRAM) device, etc.), a logic device (e.g., an AND, OR, NAND, or NOR gate), or any other suitable circuit element. Multiple ones of these devices may be combined on a single die 1902. For example, a memory array formed by multiple memory devices may be formed on a same die 1902 as a processor unit (e.g., the processor unit 2302 of FIG. 23) or other logic that is configured to store information in the memory devices or execute instructions stored in the memory array. Various ones of the systems 100 disclosed herein may be manufactured using a die-to-wafer assembly technique in which some PIC dies 104 are attached to a wafer 1900 that include others of the PIC dies 104, and the wafer 1900 is subsequently singulated.

FIG. 20 is a cross-sectional side view of an integrated circuit device 2000 that may be included in any of the systems 100 disclosed herein (e.g., in any of the PIC dies 104). One or more of the integrated circuit devices 2000 may be included in one or more dies 1902 (FIG. 19). The integrated circuit device 2000 may be formed on a die substrate 2002 (e.g., the wafer 1900 of FIG. 19) and may be included in a die (e.g., the die 1902 of FIG. 19). The die substrate 2002 may be a semiconductor substrate composed of semiconductor material systems including, for example, n-type or p-type materials systems (or a combination of both). The die substrate 2002 may include, for example, a crystalline substrate formed using a bulk silicon or a silicon-on-insulator (SOI) substructure. In some embodiments, the die substrate 2002 may be formed using alternative materials, which may or may not be combined with silicon, that include, but are not limited to, germanium, indium antimonide, lead telluride, indium arsenide, indium phosphide, gallium arsenide, or gallium antimonide. Further materials classified as group II-VI, III-V, or IV may also be used to form the die substrate 2002. Although a few examples of materials from which the die substrate 2002 may be formed are described here, any material that may serve as a foundation for an integrated circuit device 2000 may be used. The die substrate 2002 may be part of a singulated die (e.g., the dies 1902 of FIG. 19) or a wafer (e.g., the wafer 1900 of FIG. 19).

The integrated circuit device 2000 may include one or more device layers 2004 disposed on the die substrate 2002. The device layer 2004 may include features of one or more transistors 2040 (e.g., metal oxide semiconductor field-effect transistors (MOSFETs)) formed on the die substrate 2002. The transistors 2040 may include, for example, one or more source and/or drain (S/D) regions 2020, a gate 2022 to control current flow between the S/D regions 2020, and one or more S/D contacts 2024 to route electrical signals to/from the S/D regions 2020. The transistors 2040 may include additional features not depicted for the sake of clarity, such as device isolation regions, gate contacts, and the like. The transistors 2040 are not limited to the type and configuration depicted in FIG. 20 and may include a wide variety of other types and configurations such as, for example, planar transistors, non-planar transistors, or a combination of both. Non-planar transistors may include FinFET transistors, such as double-gate transistors or tri-gate transistors, and wrap-around or all-around gate transistors, such as nanoribbon, nanosheet, or nanowire transistors.

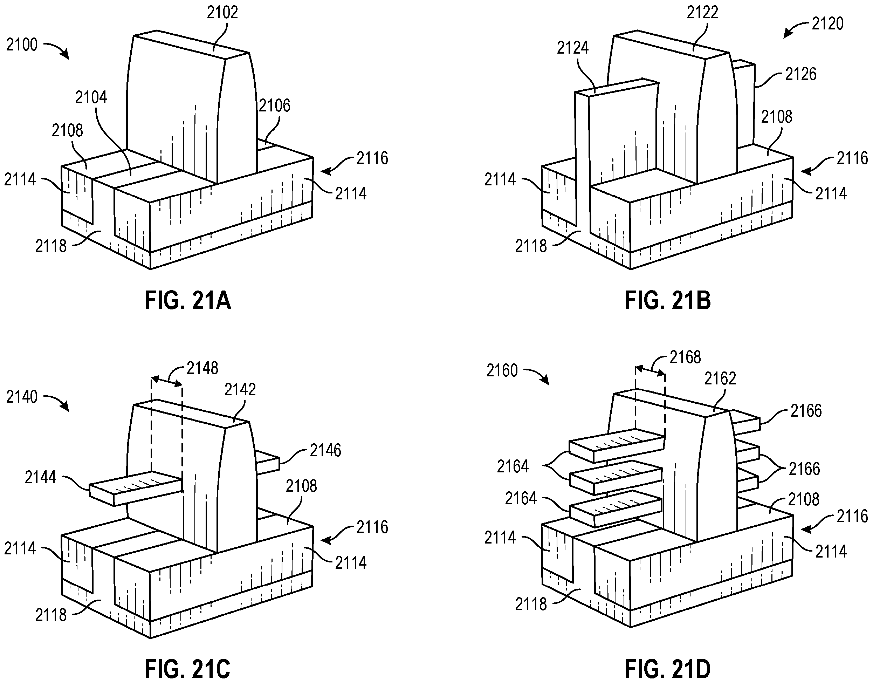

FIGS. 21A-21D are simplified perspective views of example planar, FinFET, gate-all-around, and stacked gate-all-around transistors. The transistors illustrated in FIGS. 21A-21D are formed on a substrate 2116 having a surface 2108. Isolation regions 2114 separate the source and drain regions of the transistors from other transistors and from a bulk region 2118 of the substrate 2116.

FIG. 21A is a perspective view of an example planar transistor 2100 comprising a gate 2102 that controls current flow between a source region 2104 and a drain region 2106. The transistor 2100 is planar in that the source region 2104 and the drain region 2106 are planar with respect to the substrate surface 2108.

FIG. 21B is a perspective view of an example FinFET transistor 2120 comprising a gate 2122 that controls current flow between a source region 2124 and a drain region 2126. The transistor 2120 is non-planar in that the source region 2124 and the drain region 2126 comprise "fins" that extend upwards from the substrate surface 2128. As the gate 2122 encompasses three sides of the semiconductor fin that extends from the source region 2124 to the drain region 2126, the transistor 2120 can be considered a tri-gate transistor. FIG. 21B illustrates one S/D fin extending through the gate 2122, but multiple S/D fins can extend through the gate of a FinFET transistor.

FIG. 21C is a perspective view of a gate-all-around (GAA) transistor 2140 comprising a gate 2142 that controls current flow between a source region 2144 and a drain region 2146. The transistor 2140 is non-planar in that the source region 2144 and the drain region 2146 are elevated from the substrate surface 2128.

FIG. 21D is a perspective view of a GAA transistor 2160 comprising a gate 2162 that controls current flow between multiple elevated source regions 2164 and multiple elevated drain regions 2166. The transistor 2160 is a stacked GAA transistor as the gate controls the flow of current between multiple elevated S/D regions stacked on top of each other. The transistors 2140 and 2160 are considered gate-all-around transistors as the gates encompass all sides of the semiconductor portions that extends from the source regions to the drain regions. The transistors 2140 and 2160 can alternatively be referred to as nanowire, nanosheet, or nanoribbon transistors depending on the width (e.g., widths 2148 and 2168 of transistors 2140 and 2160, respectively) of the semiconductor portions extending through the gate.

Returning to FIG. 20, a transistor 2040 may include a gate 2022 formed of at least two layers, a gate dielectric and a gate electrode. The gate dielectric may include one layer or a stack of layers. The one or more layers may include silicon oxide, silicon dioxide, silicon carbide, and/or a high-k dielectric material.

The high-k dielectric material may include elements such as hafnium, silicon, oxygen, titanium, tantalum, lanthanum, aluminum, zirconium, barium, strontium, yttrium, lead, scandium, niobium, and zinc. Examples of high-k materials that may be used in the gate dielectric include, but are not limited to, hafnium oxide, hafnium silicon oxide, lanthanum oxide, lanthanum aluminum oxide, zirconium oxide, zirconium silicon oxide, tantalum oxide, titanium oxide, barium strontium titanium oxide, barium titanium oxide, strontium titanium oxide, yttrium oxide, aluminum oxide, lead scandium tantalum oxide, and lead zinc niobate. In some embodiments, an annealing process may be carried out on the gate dielectric to improve its quality when a high-k material is used.

The gate electrode may be formed on the gate dielectric and may include at least one p-type work function metal or n-type work function metal, depending on whether the transistor 2040 is to be a p-type metal oxide semiconductor (PMOS) or an n-type metal oxide semiconductor (NMOS) transistor. In some implementations, the gate electrode may consist of a stack of two or more metal layers, where one or more metal layers are work function metal layers and at least one metal layer is a fill metal layer. Further metal layers may be included for other purposes, such as a barrier layer.

For a PMOS transistor, metals that may be used for the gate electrode include, but are not limited to, ruthenium, palladium, platinum, cobalt, nickel, conductive metal oxides (e.g., ruthenium oxide), and any of the metals discussed below with reference to an NMOS transistor (e.g., for work function tuning). For an NMOS transistor, metals that may be used for the gate electrode include, but are not limited to, hafnium, zirconium, titanium, tantalum, aluminum, alloys of these metals, carbides of these metals (e.g., hafnium carbide, zirconium carbide, titanium carbide, tantalum carbide, and aluminum carbide), and any of the metals discussed above with reference to a PMOS transistor (e.g., for work function tuning).

In some embodiments, when viewed as a cross-section of the transistor 2040 along the source-channel-drain direction, the gate electrode may consist of a U-shaped structure that includes a bottom portion substantially parallel to the surface of the die substrate 2002 and two sidewall portions that are substantially perpendicular to the top surface of the die substrate 2002. In other embodiments, at least one of the metal layers that form the gate electrode may simply be a planar layer that is substantially parallel to the top surface of the die substrate 2002 and does not include sidewall portions substantially perpendicular to the top surface of the die substrate 2002. In other embodiments, the gate electrode may consist of a combination of U-shaped structures and planar, non-U-shaped structures. For example, the gate electrode may consist of one or more U-shaped metal layers formed atop one or more planar, non-U-shaped layers.

In some embodiments, a pair of sidewall spacers may be formed on opposing sides of the gate stack to bracket the gate stack. The sidewall spacers may be formed from materials such as silicon nitride, silicon oxide, silicon carbide, silicon nitride doped with carbon, and silicon oxynitride. Processes for forming sidewall spacers are well known in the art and generally include deposition and etching process steps. In some embodiments, a plurality of spacer pairs may be used; for instance, two pairs, three pairs, or four pairs of sidewall spacers may be formed on opposing sides of the gate stack.

The S/D regions 2020 may be formed within the die substrate 2002 adjacent to the gate 2022 of individual transistors 2040. The S/D regions 2020 may be formed using an implantation/diffusion process or an etching/deposition process, for example. In the former process, dopants such as boron, aluminum, antimony, phosphorous, or arsenic may be ion-implanted into the die substrate 2002 to form the S/D regions 2020. An annealing process that activates the dopants and causes them to diffuse farther into the die substrate 2002 may follow the ion-implantation process. In the latter process, the die substrate 2002 may first be etched to form recesses at the locations of the S/D regions 2020. An epitaxial deposition process may then be carried out to fill the recesses with material that is used to fabricate the S/D regions 2020. In some implementations, the S/D regions 2020 may be fabricated using a silicon alloy such as silicon germanium or silicon carbide. In some embodiments, the epitaxially deposited silicon alloy may be doped in situ with dopants such as boron, arsenic, or phosphorous. In some embodiments, the S/D regions 2020 may be formed using one or more alternate semiconductor materials such as germanium or a group III-V material or alloy. In further embodiments, one or more layers of metal and/or metal alloys may be used to form the S/D regions 2020.

Electrical signals, such as power and/or input/output (I/O) signals, may be routed to and/or from the devices (e.g., transistors 2040) of the device layer 2004 through one or more interconnect layers disposed on the device layer 2004 (illustrated in FIG. 20 as interconnect layers 2006-2010). For example, electrically conductive features of the device layer 2004 (e.g., the gate 2022 and the S/D contacts 2024) may be electrically coupled with the interconnect structures 2028 of the interconnect layers 2006-2010. The one or more interconnect layers 2006-2010 may form a metallization stack (also referred to as an "ILD stack") 2019 of the integrated circuit device 2000.

The interconnect structures 2028 may be arranged within the interconnect layers 2006-2010 to route electrical signals according to a wide variety of designs; in particular, the arrangement is not limited to the particular configuration of interconnect structures 2028 depicted in FIG. 20. Although a particular number of interconnect layers 2006-2010 is depicted in FIG. 20, embodiments of the present disclosure include integrated circuit devices having more or fewer interconnect layers than depicted.

In some embodiments, the interconnect structures 2028 may include lines 2028a and/or vias 2028b filled with an electrically conductive material such as a metal. The lines 2028a may be arranged to route electrical signals in a direction of a plane that is substantially parallel with a surface of the die substrate 2002 upon which the device layer 2004 is formed. The vias 2028b may be arranged to route electrical signals in a direction of a plane that is substantially perpendicular to the surface of the die substrate 2002 upon which the device layer 2004 is formed. In some embodiments, the vias 2028b may electrically couple lines 2028a of different interconnect layers 2006-2010 together.

The interconnect layers 2006-2010 may include a dielectric material 2026 disposed between the interconnect structures 2028, as shown in FIG. 20. In some embodiments, dielectric material 2026 disposed between the interconnect structures 2028 in different ones of the interconnect layers 2006-2010 may have different compositions; in other embodiments, the composition of the dielectric material 2026 between different interconnect layers 2006-2010 may be the same. The device layer 2004 may include a dielectric material 2026 disposed between the transistors 2040 and a bottom layer of the metallization stack as well. The dielectric material 2026 included in the device layer 2004 may have a different composition than the dielectric material 2026 included in the interconnect layers 2006-2010; in other embodiments, the composition of the dielectric material 2026 in the device layer 2004 may be the same as a dielectric material 2026 included in any one of the interconnect layers 2006-2010.

A first interconnect layer 2006 (referred to as Metal 1 or "M1") may be formed directly on the device layer 2004. In some embodiments, the first interconnect layer 2006 may include lines 2028a and/or vias 2028b, as shown. The lines 2028a of the first interconnect layer 2006 may be coupled with contacts (e.g., the S/D contacts 2024) of the device layer 2004. The vias 2028b of the first interconnect layer 2006 may be coupled with the lines 2028a of a second interconnect layer 2008.

The second interconnect layer 2008 (referred to as Metal 2 or "M2") may be formed directly on the first interconnect layer 2006. In some embodiments, the second interconnect layer 2008 may include via 2028b to couple the lines 2028 of the second interconnect layer 2008 with the lines 2028a of a third interconnect layer 2010. Although the lines 2028a and the vias 2028b are structurally delineated with a line within individual interconnect layers for the sake of clarity, the lines 2028a and the vias 2028b may be structurally and/or materially contiguous (e.g., simultaneously filled during a dual-damascene process) in some embodiments.

The third interconnect layer 2010 (referred to as Metal 3 or "M3") (and additional interconnect layers, as desired) may be formed in succession on the second interconnect layer 2008 according to similar techniques and configurations described in connection with the second interconnect layer 2008 or the first interconnect layer 2006. In some embodiments, the interconnect layers that are "higher up" in the metallization stack 2019 in the integrated circuit device 2000 (i.e., farther away from the device layer 2004) may be thicker that the interconnect layers that are lower in the metallization stack 2019, with lines 2028a and vias 2028b in the higher interconnect layers being thicker than those in the lower interconnect layers.

The integrated circuit device 2000 may include a solder resist material 2034 (e.g., polyimide or similar material) and one or more conductive contacts 2036 formed on the interconnect layers 2006-2010. In FIG. 20, the conductive contacts 2036 are illustrated as taking the form of bond pads. The conductive contacts 2036 may be electrically coupled with the interconnect structures 2028 and configured to route the electrical signals of the transistor(s) 2040 to external devices. For example, solder bonds may be formed on the one or more conductive contacts 2036 to mechanically and/or electrically couple an integrated circuit die including the integrated circuit device 2000 with another component (e.g., a printed circuit board). The integrated circuit device 2000 may include additional or alternate structures to route the electrical signals from the interconnect layers 2006-2010; for example, the conductive contacts 2036 may include other analogous features (e.g., posts) that route the electrical signals to external components.

In some embodiments in which the integrated circuit device 2000 is a double-sided die, the integrated circuit device 2000 may include another metallization stack (not shown) on the opposite side of the device layer(s) 2004. This metallization stack may include multiple interconnect layers as discussed above with reference to the interconnect layers 2006-2010, to provide conductive pathways (e.g., including conductive lines and vias) between the device layer(s) 2004 and additional conductive contacts (not shown) on the opposite side of the integrated circuit device 2000 from the conductive contacts 2036.

In other embodiments in which the integrated circuit device 2000 is a double-sided die, the integrated circuit device 2000 may include one or more through silicon vias (TSVs) through the die substrate 2002; these TSVs may make contact with the device layer(s) 2004, and may provide conductive pathways between the device layer(s) 2004 and additional conductive contacts (not shown) on the opposite side of the integrated circuit device 2000 from the conductive contacts 2036. In some embodiments, TSVs extending through the substrate can be used for routing power and ground signals from conductive contacts on the opposite side of the integrated circuit device 2000 from the conductive contacts 2036 to the transistors 2040 and any other components integrated into the die 2000, and the metallization stack 2019 can be used to route I/O signals from the conductive contacts 2036 to transistors 2040 and any other components integrated into the die 2000.

Multiple integrated circuit devices 2000 may be stacked with one or more TSVs in the individual stacked devices providing connection between one of the devices to any of the other devices in the stack. For example, one or more high-bandwidth memory (HBM) integrated circuit dies can be stacked on top of a base integrated circuit die and TSVs in the HBM dies can provide connection between the individual HBM and the base integrated circuit die. Conductive contacts can provide additional connections between adjacent integrated circuit dies in the stack. In some embodiments, the conductive contacts can be fine-pitch solder bumps (microbumps).

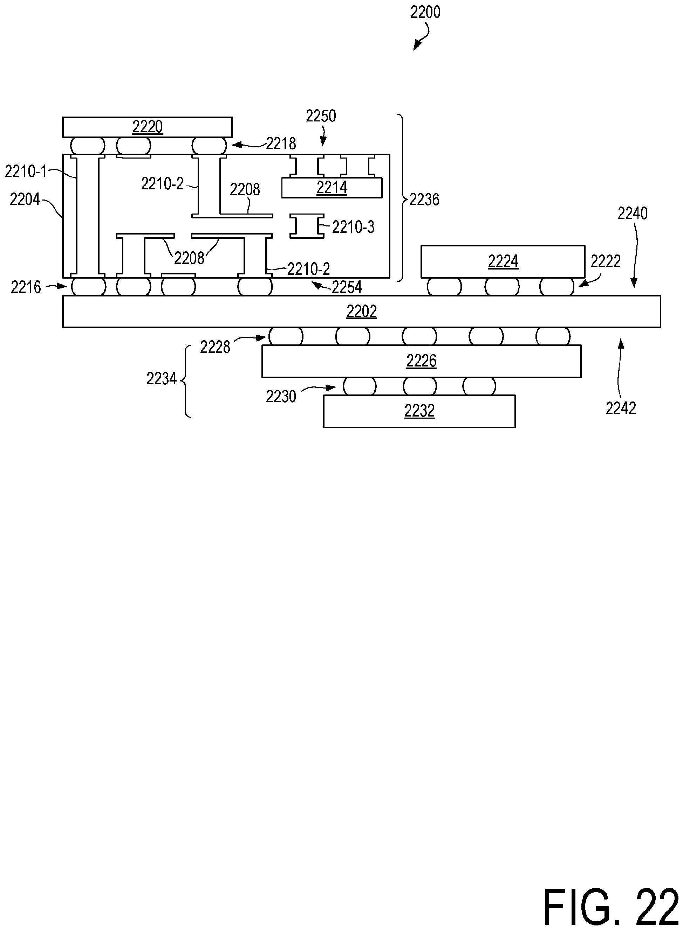

FIG. 22 is a cross-sectional side view of an integrated circuit device assembly 2200. The integrated circuit device assembly 2200 includes a number of components disposed on a circuit board 2202 (which may be a motherboard, system board, mainboard, etc.). The integrated circuit device assembly 2200 includes components disposed on a first face 2240 of the circuit board 2202 and an opposing second face 2242 of the circuit board 2202; generally, components may be disposed on one or both faces 2240 and 2242. Any of the integrated circuit components discussed below with reference to the integrated circuit device assembly 2200 may take the form of any suitable ones of the embodiments of the systems 100 disclosed herein.

In some embodiments, the circuit board 2202 may be a printed circuit board (PCB) including multiple metal (or interconnect) layers separated from one another by layers of dielectric material and interconnected by electrically conductive vias. The individual metal layers comprise conductive traces. Any one or more of the metal layers may be formed in a desired circuit pattern to route electrical signals (optionally in conjunction with other metal layers) between the components coupled to the circuit board 2202. In other embodiments, the circuit board 2202 may be a non-PCB substrate. In some embodiments the circuit board 2202 may be, for example, the substrate 102. The integrated circuit device assembly 2200 illustrated in FIG. 22 includes a package-on-interposer structure 2236 coupled to the first face 2240 of the circuit board 2202 by coupling components 2216. The coupling components 2216 may electrically and mechanically couple the package-on-interposer structure 2236 to the circuit board 2202, and may include solder balls (as shown in FIG. 22), pins (e.g., as part of a pin grid array (PGA), contacts (e.g., as part of a land grid array (LGA)), male and female portions of a socket, an adhesive, an underfill material, and/or any other suitable electrical and/or mechanical coupling structure.

The package-on-interposer structure 2236 may include an integrated circuit component 2220 coupled to an interposer 2204 by coupling components 2218. The coupling components 2218 may take any suitable form for the application, such as the forms discussed above with reference to the coupling components 2216. Although a single integrated circuit component 2220 is shown in FIG. 22, multiple integrated circuit components may be coupled to the interposer 2204; indeed, additional interposers may be coupled to the interposer 2204. The interposer 2204 may provide an intervening substrate used to bridge the circuit board 2202 and the integrated circuit component 2220.

The integrated circuit component 2220 may be a packaged or unpacked integrated circuit product that includes one or more integrated circuit dies (e.g., the die 1902 of FIG. 19, the integrated circuit device 2000 of FIG. 20) and/or one or more other suitable components. A packaged integrated circuit component comprises one or more integrated circuit dies mounted on a package substrate with the integrated circuit dies and package substrate encapsulated in a casing material, such as a metal, plastic, glass, or ceramic. In one example of an unpackaged integrated circuit component 2220, a single monolithic integrated circuit die comprises solder bumps attached to contacts on the die. The solder bumps allow the die to be directly attached to the interposer 2204. The integrated circuit component 2220 can comprise one or more computing system components, such as one or more processor units (e.g., system-on-a-chip (SoC), processor core, graphics processor unit (GPU), accelerator, chipset processor), I/O controller, memory, or network interface controller. In some embodiments, the integrated circuit component 2220 can comprise one or more additional active or passive devices such as capacitors, decoupling capacitors, resistors, inductors, fuses, diodes, transformers, sensors, electrostatic discharge (ESD) devices, and memory devices.

In embodiments where the integrated circuit component 2220 comprises multiple integrated circuit dies, they dies can be of the same type (a homogeneous multi-die integrated circuit component) or of two or more different types (a heterogeneous multi-die integrated circuit component). A multi-die integrated circuit component can be referred to as a multi-chip package (MCP) or multi-chip module (MCM).

In addition to comprising one or more processor units, the integrated circuit component 2220 can comprise additional components, such as embedded DRAM, stacked high bandwidth memory (HBM), shared cache memories, input/output (I/O) controllers, or memory controllers. Any of these additional components can be located on the same integrated circuit die as a processor unit, or on one or more integrated circuit dies separate from the integrated circuit dies comprising the processor units. These separate integrated circuit dies can be referred to as "chiplets". In embodiments where an integrated circuit component comprises multiple integrated circuit dies, interconnections between dies can be provided by the package substrate, one or more silicon interposers, one or more silicon bridges embedded in the package substrate (such as Intel^{®} embedded multi-die interconnect bridges (EMIBs)), or combinations thereof.

Generally, the interposer 2204 may spread connections to a wider pitch or reroute a connection to a different connection. For example, the interposer 2204 may couple the integrated circuit component 2220 to a set of ball grid array (BGA) conductive contacts of the coupling components 2216 for coupling to the circuit board 2202. In the embodiment illustrated in FIG. 22, the integrated circuit component 2220 and the circuit board 2202 are attached to opposing sides of the interposer 2204; in other embodiments, the integrated circuit component 2220 and the circuit board 2202 may be attached to a same side of the interposer 2204. In some embodiments, three or more components may be interconnected by way of the interposer 2204.

In some embodiments, the interposer 2204 may be formed as a PCB, including multiple metal layers separated from one another by layers of dielectric material and interconnected by electrically conductive vias. In some embodiments, the interposer 2204 may be formed of an epoxy resin, a fiberglass-reinforced epoxy resin, an epoxy resin with inorganic fillers, a ceramic material, or a polymer material such as polyimide. In some embodiments, the interposer 2204 may be formed of alternate rigid or flexible materials that may include the same materials described above for use in a semiconductor substrate, such as silicon, germanium, and other group III-V and group IV materials. The interposer 2204 may include metal interconnects 2208 and vias 2210, including but not limited to through hole vias 2210-1 (that extend from a first face 2250 of the interposer 2204 to a second face 2254 of the interposer 2204), blind vias 2210-2 (that extend from the first or second faces 2250 or 2254 of the interposer 2204 to an internal metal layer), and buried vias 2210-3 (that connect internal metal layers).

In some embodiments, the interposer 2204 can comprise a silicon interposer. Through silicon vias (TSV) extending through the silicon interposer can connect connections on a first face of a silicon interposer to an opposing second face of the silicon interposer. In some embodiments, an interposer 2204 comprising a silicon interposer can further comprise one or more routing layers to route connections on a first face of the interposer 2204 to an opposing second face of the interposer 2204.

The interposer 2204 may further include embedded devices 2214, including both passive and active devices. Such devices may include, but are not limited to, capacitors, decoupling capacitors, resistors, inductors, fuses, diodes, transformers, sensors, electrostatic discharge (ESD) devices, and memory devices. More complex devices such as radio frequency devices, power amplifiers, power management devices, antennas, arrays, sensors, and microelectromechanical systems (MEMS) devices may also be formed on the interposer 2204. The package-on-interposer structure 2236 may take the form of any of the package-on-interposer structures known in the art. In embodiments where the interposer is a non-printed circuit board

The integrated circuit device assembly 2200 may include an integrated circuit component 2224 coupled to the first face 2240 of the circuit board 2202 by coupling components 2222. The coupling components 2222 may take the form of any of the embodiments discussed above with reference to the coupling components 2216, and the integrated circuit component 2224 may take the form of any of the embodiments discussed above with reference to the integrated circuit component 2220.

The integrated circuit device assembly 2200 illustrated in FIG. 22 includes a package-on-package structure 2234 coupled to the second face 2242 of the circuit board 2202 by coupling components 2228. The package-on-package structure 2234 may include an integrated circuit component 2226 and an integrated circuit component 2232 coupled together by coupling components 2230 such that the integrated circuit component 2226 is disposed between the circuit board 2202 and the integrated circuit component 2232. The coupling components 2228 and 2230 may take the form of any of the embodiments of the coupling components 2216 discussed above, and the integrated circuit components 2226 and 2232 may take the form of any of the embodiments of the integrated circuit component 2220 discussed above. The package-on-package structure 2234 may be configured in accordance with any of the package-on-package structures known in the art.

FIG. 23 is a block diagram of an example electrical device 2300 that may include one or more of the systems 100 disclosed herein. For example, any suitable ones of the components of the electrical device 2300 may include one or more of the integrated circuit device assemblies 2200, integrated circuit components 2220, integrated circuit devices 2000, or integrated circuit dies 1902 disclosed herein, and may be arranged in any of the systems 100 disclosed herein. A number of components are illustrated in FIG. 23 as included in the electrical device 2300, but any one or more of these components may be omitted or duplicated, as suitable for the application. In some embodiments, some or all of the components included in the electrical device 2300 may be attached to one or more motherboards mainboards, or system boards. In some embodiments, one or more of these components are fabricated onto a single system-on-a-chip (SoC) die.

Additionally, in various embodiments, the electrical device 2300 may not include one or more of the components illustrated in FIG. 23, but the electrical device 2300 may include interface circuitry for coupling to the one or more components. For example, the electrical device 2300 may not include a display device 2306, but may include display device interface circuitry (e.g., a connector and driver circuitry) to which a display device 2306 may be coupled. In another set of examples, the electrical device 2300 may not include an audio input device 2324 or an audio output device 2308, but may include audio input or output device interface circuitry (e.g., connectors and supporting circuitry) to which an audio input device 2324 or audio output device 2308 may be coupled.

The electrical device 2300 may include one or more processor units 2302 (e.g., one or more processor units). As used herein, the terms "processor unit", "processing unit" or "processor" may refer to any device or portion of a device that processes electronic data from registers and/or memory to transform that electronic data into other electronic data that may be stored in registers and/or memory. The processor unit 2302 may include one or more digital signal processors (DSPs), application-specific integrated circuits (ASICs), central processing units (CPUs), graphics processing units (GPUs), general-purpose GPUs (GPGPUs), accelerated processing units (APUs), field-programmable gate arrays (FPGAs), neural network processing units (NPUs), data processor units (DPUs), accelerators (e.g., graphics accelerator, compression accelerator, artificial intelligence accelerator), controller cryptoprocessors (specialized processors that execute cryptographic algorithms within hardware), server processors, controllers, or any other suitable type of processor units. As such, the processor unit can be referred to as an XPU (or xPU).

The electrical device 2300 may include a memory 2304, which may itself include one or more memory devices such as volatile memory (e.g., dynamic random access memory (DRAM), static random-access memory (SRAM)), non-volatile memory (e.g., read-only memory (ROM), flash memory, chalcogenide-based phase-change non-voltage memories), solid state memory, and/or a hard drive. In some embodiments, the memory 2304 may include memory that is located on the same integrated circuit die as the processor unit 2302. This memory may be used as cache memory (e.g., Level 1 (L1), Level 2 (L2), Level 3 (L3), Level 4 (L4), Last Level Cache (LLC)) and may include embedded dynamic random access memory (eDRAM) or spin transfer torque magnetic random access memory (STT-MRAM).

In some embodiments, the electrical device 2300 can comprise one or more processor units 2302 that are heterogeneous or asymmetric to another processor unit 2302 in the electrical device 2300. There can be a variety of differences between the processing units 2302 in a system in terms of a spectrum of metrics of merit including architectural, microarchitectural, thermal, power consumption characteristics, and the like. These differences can effectively manifest themselves as asymmetry and heterogeneity among the processor units 2302 in the electrical device 2300.

In some embodiments, the electrical device 2300 may include a communication component 2312 (e.g., one or more communication components). For example, the communication component 2312 can manage wireless communications for the transfer of data to and from the electrical device 2300. The term "wireless" and its derivatives may be used to describe circuits, devices, systems, methods, techniques, communications channels, etc., that may communicate data through the use of modulated electromagnetic radiation through a nonsolid medium. The term "wireless" does not imply that the associated devices do not contain any wires, although in some embodiments they might not.

The communication component 2312 may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The communication component 2312 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication component 2312 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication component 2312 may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication component 2312 may operate in accordance with other wireless protocols in other embodiments. The electrical device 2300 may include an antenna 2322 to facilitate wireless communications and/or to receive other wireless communications (such as AM or FM radio transmissions).

In some embodiments, the communication component 2312 may manage wired communications, such as electrical, optical, or any other suitable communication protocols (e.g., IEEE 802.3 Ethernet standards). As noted above, the communication component 2312 may include multiple communication components. For instance, a first communication component 2312 may be dedicated to shorter-range wireless communications such as Wi-Fi or Bluetooth, and a second communication component 2312 may be dedicated to longer-range wireless communications such as global positioning system (GPS), EDGE, GPRS, CDMA, WiMAX, LTE, EV-DO, or others. In some embodiments, a first communication component 2312 may be dedicated to wireless communications, and a second communication component 2312 may be dedicated to wired communications.

The electrical device 2300 may include battery/power circuitry 2314. The battery/power circuitry 2314 may include one or more energy storage devices (e.g., batteries or capacitors) and/or circuitry for coupling components of the electrical device 2300 to an energy source separate from the electrical device 2300 (e.g., AC line power).

The electrical device 2300 may include a display device 2306 (or corresponding interface circuitry, as discussed above). The display device 2306 may include one or more embedded or wired or wirelessly connected external visual indicators, such as a heads-up display, a computer monitor, a projector, a touchscreen display, a liquid crystal display (LCD), a light-emitting diode display, or a flat panel display.

The electrical device 2300 may include an audio output device 2308 (or corresponding interface circuitry, as discussed above). The audio output device 2308 may include any embedded or wired or wirelessly connected external device that generates an audible indicator, such speakers, headsets, or earbuds.

The electrical device 2300 may include an audio input device 2324 (or corresponding interface circuitry, as discussed above). The audio input device 2324 may include any embedded or wired or wirelessly connected device that generates a signal representative of a sound, such as microphones, microphone arrays, or digital instruments (e.g., instruments having a musical instrument digital interface (MIDI) output). The electrical device 2300 may include a Global Navigation Satellite System (GNSS) device 2318 (or corresponding interface circuitry, as discussed above), such as a Global Positioning System (GPS) device. The GNSS device 2318 may be in communication with a satellite-based system and may determine a geolocation of the electrical device 2300 based on information received from one or more GNSS satellites, as known in the art.

The electrical device 2300 may include an other output device 2310 (or corresponding interface circuitry, as discussed above). Examples of the other output device 2310 may include an audio codec, a video codec, a printer, a wired or wireless transmitter for providing information to other devices, or an additional storage device.

The electrical device 2300 may include an other input device 2320 (or corresponding interface circuitry, as discussed above). Examples of the other input device 2320 may include an accelerometer, a gyroscope, a compass, an image capture device (e.g., monoscopic or stereoscopic camera), a trackball, a trackpad, a touchpad, a keyboard, a cursor control device such as a mouse, a stylus, a touchscreen, proximity sensor, microphone, a bar code reader, a Quick Response (QR) code reader, electrocardiogram (ECG) sensor, PPG (photoplethysmogram) sensor, galvanic skin response sensor, any other sensor, or a radio frequency identification (RFID) reader.

The electrical device 2300 may have any desired form factor, such as a hand-held or mobile electrical device (e.g., a cell phone, a smart phone, a mobile internet device, a music player, a tablet computer, a laptop computer, a 2-in-1 convertible computer, a portable all-in-one computer, a netbook computer, an ultrabook computer, a personal digital assistant (PDA), an ultra mobile personal computer, a portable gaming console, etc.), a desktop electrical device, a server, a rack-level computing solution (e.g., blade, tray or sled computing systems), a workstation or other networked computing component, a printer, a scanner, a monitor, a set-top box, an entertainment control unit, a stationary gaming console, smart television, a vehicle control unit, a digital camera, a digital video recorder, a wearable electrical device or an embedded computing system (e.g., computing systems that are part of a vehicle, smart home appliance, consumer electronics product or equipment, manufacturing equipment). In some embodiments, the electrical device 2300 may be any other electronic device that processes data. In some embodiments, the electrical device 2300 may comprise multiple discrete physical components. Given the range of devices that the electrical device 2300 can be manifested as in various embodiments, in some embodiments, the electrical device 2300 can be referred to as a computing device or a computing system.

### EXAMPLES

Illustrative examples of the technologies disclosed herein are provided below. An embodiment of the technologies may include any one or more, and any combination of, the examples described below.

Example 1 includes an apparatus comprising a photonic integrated circuit (PIC) die, wherein one or more waveguides are defined in the PIC die, wherein the PIC die has a top surface and a side surface, wherein individual waveguides of the one or more waveguides extend through at least part of the PIC die in a direction parallel to the top surface and toward the side surface; and a lens assembly, wherein the lens assembly comprises one or more lenses, wherein individual lenses of the one or more lenses are positioned to focus light that comes from corresponding waveguides of the one or more waveguides and that passes through the side surface, wherein at least part of the lens assembly extends over the top surface of the PIC die and is in contact with the top surface PIC die.

Example 2 includes the subject matter of Example 1, and wherein a cavity is defined in the PIC die that extends below a plane defined by the top surface, wherein at least part of the lens assembly is in the cavity.

Example 3 includes the subject matter of any of Examples 1 and 2, and further including epoxy to secure the lens assembly to a surface of the PIC die at a bottom of the cavity.

Example 4 includes the subject matter of any of Examples 1-3, and further including a substrate, wherein the PIC die is mounted on the substrate, further comprising an integrated circuit component mounted on the substrate, wherein the integrated circuit component is communicatively coupled to the PIC die.

Example 5 includes the subject matter of any of Examples 1-4, and wherein the cavity extends past the lens assembly in both directions along one dimension of the cavity.

Example 6 includes the subject matter of any of Examples 1-5, and wherein the side surface is perpendicular to the top surface.

Example 7 includes the subject matter of any of Examples 1-6, and wherein individual lenses of the one or more lenses are spherical lenses.

Example 8 includes the subject matter of any of Examples 1-7, and wherein the one or more lenses comprise a cylindrical lens extending across at least two waveguides of the one or more waveguides, wherein the cylindrical lens is positioned to collimate light from individual waveguides of the one or more waveguides in a first direction, wherein one or more cylindrical lenses are defined in the side surface of the PIC die, wherein individual cylindrical lenses of the one or more cylindrical lenses are positioned to collimate light from individual waveguides of the one or more waveguides in a second direction different from the first direction.

Example 9 includes a wafer comprising a plurality of photonic integrated circuits (PICs), wherein individual PICs of the plurality of PICs have a cavity defined in the PIC that extend below a top surface of the PIC; and a plurality of lens assemblies, wherein individual lens assemblies of the plurality of lens assemblies comprise one or more lenses, wherein at least part of individual lens assemblies of the plurality of lens assemblies is in the cavity of a corresponding PIC of the plurality of PICs, wherein at least part of individual lens assemblies of the plurality of lens assemblies extend over the top surface of a corresponding PIC of the plurality of PICs.

Example 10 includes the subject matter of Example 9, and further including epoxy to secure individual lens assemblies of the plurality of lens assemblies to a surface at a bottom of the cavity of a corresponding PIC of the plurality of PICs.

Example 11 includes the subject matter of any of Examples 9 and 10, and wherein individual lenses of the one or more lenses of individual lens assemblies of the plurality of lens assemblies are spherical lenses.

Example 12 includes the subject matter of any of Examples 9-11, and wherein the one or more lenses of individual lens assemblies of the plurality of lens assemblies comprise a cylindrical extending parallel to a top surface of the wafer, wherein one or more cylindrical lenses are defined in a side surface of individual PICs of the plurality of PICs.

Example 13 includes a method comprising forming one or more waveguides in a photonic integrated circuit (PIC) die, wherein the PIC die has a top surface and a side surface, wherein individual waveguides of the one or more waveguides extend through at least part of the PIC die in a direction parallel to the top surface and toward the side surface; and positioning a lens assembly on a top surface of the PIC die, wherein at least part of the lens assembly is above the top surface and in contact with the top surface, and wherein at least part of the lens assembly is below the top surface, wherein the lens assembly comprises one or more lenses, wherein individual lenses of the one or more lenses are positioned to focus light that comes from corresponding waveguides of the one or more waveguides and that passes through the side surface.

Example 14 includes the subject matter of Example 13, and further including singulating a wafer comprising the PIC die after positioning the lens assembly on the top surface of the PIC die.

Example 15 includes the subject matter of any of Examples 13 and 14, and further including forming a cavity in the PIC die that extends below a plane defined by the top surface, wherein at least part of the lens assembly is in the cavity.

Example 16 includes the subject matter of any of Examples 13-15, and further including dispensing epoxy to secure the lens assembly to a surface of the PIC die at a bottom of the cavity.

Example 17 includes the subject matter of any of Examples 13-16, and wherein the cavity extends past the lens assembly in both directions along one dimension of the cavity.

Example 18 includes the subject matter of any of Examples 13-17, and further including positioning a transparent window over the lens assembly to hold the lens assembly in place; and exposing the epoxy to light through the transparent window to cure the epoxy.

Example 19 includes the subject matter of any of Examples 13-18, and further including testing the PIC die to determine whether the PIC die is faulty; and adding the PIC die to a package in response to a determination that the PIC die is not faulty.

Example 20 includes the subject matter of any of Examples 13-19, and further including mounting the PIC die on a substrate; and mounting an integrated circuit component on the substrate, wherein the integrated circuit component is communicatively coupled to the PIC die.

Example 21 includes the subject matter of any of Examples 13-20, and wherein the side surface is perpendicular to the top surface.

Example 22 includes the subject matter of any of Examples 13-21, and wherein individual lenses of the one or more lenses are spherical lenses.

Example 23 includes the subject matter of any of Examples 13-22, and wherein the one or more lenses comprise a cylindrical lens extending across at least two waveguides of the one or more waveguides, wherein the cylindrical lens is positioned to collimate light from individual waveguides of the one or more waveguides in a first direction, wherein one or more cylindrical lenses are defined in the side surface of the PIC die, wherein individual cylindrical lenses of the one or more cylindrical lenses are positioned to collimate light from individual waveguides of the one or more waveguides in a second direction different from the first direction.

## Claims

1. An apparatus comprising:
a photonic integrated circuit (PIC) die, wherein one or more waveguides are defined in the PIC die,
wherein the PIC die has a top surface and a side surface,
wherein individual waveguides of the one or more waveguides extend through at least part of the PIC die in a direction parallel to the top surface and toward the side surface; and
a lens assembly, wherein the lens assembly comprises one or more lenses, wherein individual lenses of the one or more lenses are positioned to focus light that comes from corresponding waveguides of the one or more waveguides and that passes through the side surface,
wherein at least part of the lens assembly extends over the top surface of the PIC die and is in contact with the top surface PIC die.

2. The apparatus of claim 1, wherein a cavity is defined in the PIC die that extends below a plane defined by the top surface, wherein at least part of the lens assembly is in the cavity.

3. The apparatus of claim 2, further comprising epoxy to secure the lens assembly to a surface of the PIC die at a bottom of the cavity.

4. The apparatus of claim 2, further comprising a substrate, wherein the PIC die is mounted on the substrate,
further comprising an integrated circuit component mounted on the substrate, wherein the integrated circuit component is communicatively coupled to the PIC die.

5. The apparatus of claim 2, wherein the cavity extends past the lens assembly in both directions along one dimension of the cavity.

6. The apparatus of any of claims 1-5, wherein individual lenses of the one or more lenses are spherical lenses.

7. The apparatus of any of claims 1-5, wherein the one or more lenses comprise a cylindrical lens extending across at least two waveguides of the one or more waveguides, wherein the cylindrical lens is positioned to collimate light from individual waveguides of the one or more waveguides in a first direction,
wherein one or more cylindrical lenses are defined in the side surface of the PIC die, wherein individual cylindrical lenses of the one or more cylindrical lenses are positioned to collimate light from individual waveguides of the one or more waveguides in a second direction different from the first direction.

8. A method comprising:
forming one or more waveguides in a photonic integrated circuit (PIC) die,
wherein the PIC die has a top surface and a side surface,
wherein individual waveguides of the one or more waveguides extend through at least part of the PIC die in a direction parallel to the top surface and toward the side surface; and
positioning a lens assembly on a top surface of the PIC die, wherein at least part of the lens assembly is above the top surface and in contact with the top surface, and wherein at least part of the lens assembly is below the top surface,
wherein the lens assembly comprises one or more lenses, wherein individual lenses of the one or more lenses are positioned to focus light that comes from corresponding waveguides of the one or more waveguides and that passes through the side surface.

9. The method of claim 8, further comprising singulating a wafer comprising the PIC die after positioning the lens assembly on the top surface of the PIC die.

10. The method of any of claims 8 or 9, further comprising forming a cavity in the PIC die that extends below a plane defined by the top surface, wherein at least part of the lens assembly is in the cavity.

11. The method of claim 10, further comprising dispensing epoxy to secure the lens assembly to a surface of the PIC die at a bottom of the cavity.

12. The method of any of claims 10 or 11, wherein the cavity extends past the lens assembly in both directions along one dimension of the cavity.

13. The method of claim 11, further comprising:
positioning a transparent window over the lens assembly to hold the lens assembly in place; and
exposing the epoxy to light through the transparent window to cure the epoxy.

14. The method of any of claims 8-13, further comprising:
testing the PIC die to determine whether the PIC die is faulty; and
adding the PIC die to a package in response to a determination that the PIC die is not faulty.

15. The method of any of claims 8-13, further comprising:
mounting the PIC die on a substrate; and
mounting an integrated circuit component on the substrate, wherein the integrated circuit component is communicatively coupled to the PIC die.
